(19) Europäisches Patentamt
European Patent Office
Office européen des brevets

(11) Veröffentlichungsnummer: **0 079 043**
**B1**

(12) # EUROPÄISCHE PATENTSCHRIFT

(45) Veröffentlichungstag der Patentschrift: **21.08.85**

(51) Int. Cl.⁴: **C 07 F 7/12**

(21) Anmeldenummer: **82110135.9**

(22) Anmeldetag: **04.11.82**

(54) **Verfahren zur Herstellung von 2-Chlorethylsilanen.**

(30) Priorität: **05.11.81 DE 3144020**

(43) Veröffentlichungstag der Anmeldung:
**18.05.83 Patentblatt 83/20**

(45) Bekanntmachung des Hinweises auf die Patenterteilung:
**21.08.85 Patentblatt 85/34**

(84) Benannte Vertragsstaaten:
**CH DE FR GB IT LI**

(56) Entgegenhaltungen:
**DE - B - 2 461 480**
**US - A - 4 055 584**

(73) Patentinhaber: **WACKER-CHEMIE GMBH,
Prinzregentenstrasse 22, D-8000 München 22 (DE)**

(72) Erfinder: **John, Peter, Dr., Marienberger Strasse 80,
D-8263 Burghausen (DE)**
Erfinder: **Artes, Reinhold, Dr., Bachstrasse 16,
D-8263 Burghausen (DE)**
Erfinder: **Frey, Volker, Dr., Asternweg 7a,
D-8263 Burghausen (DE)**
Erfinder: **Scherer, Mathias, Mühlbachstrasse 53,
D-8261 Emmerting (DE)**

**EP 0 079 043 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bereits bekannt, 2-Chlorethylsilane oder, wie derartige Silane ebenfalls bezeichnet werden, beta-Chlorethylsilane, durch Umsetzung von Vinylchlorsilan mit Chlorwasserstoff in Gegenwart von Katalysator herzustellen. Hierzu wird z. B. auf US 4 049 690, ausgegeben 20. September 1977, C.-D. Seiler et al., Dynamit Nobel Aktiengesellschaft, verwiesen. Gegenüber den bisher bekannten Verfahren dieser Art hat das erfindungsgemäße Verfahren insbesondere die Vorteile, daß es mit geringeren Katalysatormengen praktisch quantitative Ausbeuten ergibt, bei Drücken unterhalb des Umgebungsdrucks durchgeführt werden kann, so daß nicht für die Beseitigung von überschüssigem Chlorwasserstoff gesorgt werden muß, und daß die gewünschten 2-Chlorethylsilane leichter in reiner Form gewonnen werden können.

Gegenstand der Erfindung ist ein Verfahren zur Herstellung von 2-Chlorethylsilanen durch Umsetzung von Vinylchlorsilan mit Chlorwasserstoff in Gegenwart von Katalysator, dadurch gekennzeichnet, daß als Katalysator mindestens eine Organoaluminiumverbindung der allgemeinen Formel

$R_cAlY_{3-c}$,

worin R gleiche oder verschiedene Alkylreste mit 1 bis 4 Kohlenstoffatomen, Y Halogen oder Wasserstoff bedeutet und c 1, 2 oder 3 ist, bzw. in situ entstandenes Umsetzungsprodukt einer solchen Aluminiumverbindung mit mindestens einem der Reaktionsteilnehmer verwendet und vor dem Abdestillieren des gewünschten 2-Chlorethylsilans der Katalysator gegebenenfalls desaktiviert wird.

Bei den bei dem erfindungsgemäßen Verfahren eingesetzten Vinylchlorsilanen handelt es sich vorzugsweise um solche der allgemeinen Formel

$(CH_2=CH)_aSi(CH_3)_bCl_{4-a-b}$,

worin a 1 oder 2 und b 0 oder 1 ist, mit der Maßgabe, daß b 0 ist, wenn a 2 ist. Silane dieser Formel sind Vinyltrichlorsilan, Vinylmethyldichlorsilan und Divinyldichlorsilan.

Vorzugsweise wird Chlorwasserstoff in Mengen von 1 bis 1,1 Grammol je Grammol Vinylgruppe von Vinylchlorsilan eingesetzt.

Beispiele für Kohlenwassersktoffreste R sind Alkylreste, wie der Methyl-, Ethyl-, n-Propyl-, Isopropyl-, n-Butyl-, sec.-Butyl- und tert.-Butylrest und Alkenylreste, wie der Vinyl-, Allyl-, Methallyl- und Isopropenylrest.

Wegen der leichteren Zugänglichkeit ist als Halogen Y Chlor bevorzugt. Y kann aber auch Fluor, Brom oder Jod sein.

Einzelne Beispiele für im Rahmen des erfindungsgemäßen Verfahrens verwendbare Organoaluminiumverbindungen sind

Ethylaluminiumsesquichlorid
Diethylaluminiumchlorid
Ethylaluminiumdichlorid
Trimethylaluminium
Methylaluminiumsesquichlorid
Triethylaluminium
Tri-n-propylaluminium
n-Propylaluminiumdichlorid
Di-n-butylaluminiumhydrid.

Als Organoaluminiumverbindungen sind solche bevorzugt, die bei Raumtemperatur flüssig sind und einen Siedepunkt über 150° C bei 1 bar (abs.) haben. Wegen der leichten Zugänglichkeit ist Ethylaluminiumsesquichlorid besonders bevorzugt. Es können selbstverständlich auch Gemische aus verschiedenen Organoaluminiumverbindungen eingesetzt werden.

Es sollte nicht ausgeschlossen werden, daß Organoaluminiumverbindungen mit z. B. Chlorwasserstoff leicht reagieren. Daher wurde die Formulierung »Organoaluminiumverbindung bzw. in situ entstandenes Umsetzungsprodukt einer solchen Aluminiumverbindung mit mindestens einem der Reaktionsteilnehmer« gewählt.

Vorzugsweise wird Organoaluminiumverbindung in Mengen von 0,05 bis 1 Gewichtsprozent, bezogen auf das Gewicht der jeweils eingesetzten Menge von Vinylchlorsilan, verwendet.

Das erfindungsgemäße Verfahren wird vorzugsweise bei −10° C bis 55° C, insbesondere höchstens 50° C, und 0,1 bar (abs.) bis 15 bar (abs.) durchgeführt, wobei Drücke von 0,1 bar (abs.) bis zum Druck der umgebenden Atmosphäre bevorzugt sind.

Vorzugsweise wird der Zutritt von Wasser, soweit möglich, ausgeschlossen.

Das erfindungsgemäße Verfahren wird vorzugsweise absatzweise durchgeführt. Das erfindungsgemäße Verfahren kann jedoch auch halbkontinuierlich oder vollkontinuierlich durchgeführt werden. Wird das erfindungsgemäße Verfahren halbkontinuierlich oder vollkontinuierlich durchgeführt, so

kann dies z. B. in einem Rohr, das gewendelt sein kann und U- oder ringförmig gebogen sein kann, erfolgen. In einem solchen Rohr kann der Reaktorinhalt mit einer Geschwindigkeit von mindestens 1000 cm/Minute im Umlauf geführt werden.

Vorzugsweise wird vor der Aufarbeitung des nach Durchführung des erfindungsgemäßen Verfahrens erhaltenen Gemisches durch Destillation der Katalysator desaktiviert. Dieses Desaktivieren erfolgt vorzugsweise durch Zugabe von Organopolysiloxan, das bei Raumtemperatur flüssig ist, wie bei Raumtemperatur flüssigem, durch Trimethylsiloxygruppen endblockiertem Dimethylpolysiloxan, bei Raumtemperatur flüssigem, in den endständigen Einheiten je eine Si-gebundene Hydroxylgruppe aufweisendem Dimethylpolysiloxan oder cyclischem Organopolysiloxan, wie Octamethylcyclotetrasiloxan, zu dem Gemisch, aus dem das gewünschte 2-Chlorethylsilan abdestilliert werden soll, kann aber auch beispielsweise durch Zugabe von Alkalimetallchlorid, wie Natriumchlorid, oder Ammoniumchlorid zu diesem Gemisch erfolgen. Selbstverständlich können bei dieser Desaktivierung auch Gemische aus mindestens zwei verschiedenen Desaktivierungsmitteln eingesetzt werden.

Wenn der Katalysator mittels Organopolysiloxan desaktiviert wird, wird Organopolysiloxan vorzugsweise in Mengen von 1 bis 1,5 Grammatom Si-gebundenen Sauerstoffs je Mol eingesetzter Organoaluminiumverbindung, verwendet.

2-Halogenethylsilane sind wichtige Zwischenprodukte für die Herstellung von Mitteln zur Regelung von Pflanzenwachstum.

## Beispiel 1

a) In einem 4-l-Dreihalskolben, der mit Rührer, Rückflußkühler, Thermometer und Gaseinleitungsrohr ausgestattet ist, wird der Druck zunächst auf 16 mbar (abs.) erniedrigt und dann wieder mit Stickstoff auf den Druck der umgebenden Atmosphäre, also etwa 1000 mbar (abs.), gebracht. Diese Arbeitsweise wird fünfmal wiederholt. Dann werden unter strömendem Stickstoff 2,6 l (20,4 Mol) Vinyltrichlorsilan und 7,5 ml (0,25 Gewichtsprozent, bezogen auf das Gewicht des Vinyltrichlorsilans) Ethylaluminiumsesquichlorid in den Kolben gegeben. Anschließend werden in die so erhaltene Mischung 767 g (21 Mol) Chlorwasserstoff innerhalb von 8 Stunden eingeleitet. Dabei wird durch Außenkühlung dafür gesorgt, daß die Temperatur des Kolbeninhalts 50° C nicht übersteigt. Es werden 4010 g Rohprodukt mit einem gaschromatographisch bestimmten Gehalt von 99 Gewichtsprozent 2-Chlorethyltrichlorsilan erhalten, was 99,3 d. Th. entspricht.

b) 2005 g des Rohprodukts, dessen Herstellung vorstehend unter a) beschrieben wurde, werden mit 5 ml eines durch Trimethylsiloxygruppen endblockierten Dimethylpolysiloxans mit einer Viskosität von etwa 5 $mm^2 \cdot s^{-1}$ bei 25° C versetzt. Die so erhaltene Mischung wird 15 Minuten gerührt. Die anschließende Destillation bei 70° C und 67 mbar (abs.) ergibt 1960 g 2-Chlorethyltrichlorsilan mit einer gaschromatographisch bestimmten Reinheit von 99,5 Gewichtsprozent.

c) Die restlichen 2005 g des Rohprodukts, dessen Herstellung oben unter a) beschrieben wurde, werden ohne vorherigen Zusatz bei 70° C und 67 mbar (abs.) destilliert. Es werden 1810 g 2-Chlorethyltrichlorsilan mit einer gaschromatographisch bestimmten Reinheit von 96 Gewichtsprozent erhalten. Die restlichen 4 Gewichtsprozent bestehen im wesentlichen aus Vinyltrichlorsilan, das bei der Destillation des 2-Ethyltrichlorsilans gebildet wurde.

## Beispiel 2

In einem 500-ml-Dreihalskolben, der mit Rührer, Rückflußkühler, Thermometer und Gaseinleitungsrohr ausgestattet ist, wird der Druck zunächst auf 16 mbar (abs.) erniedrigt und dann wieder mit Stickstoff auf den Druck der umgebenden Atmosphäre gebracht. Diese Arbeitsweise wird fünfmal wiederholt. Dann werden unter strömendem Stickstoff 255 ml (2 Mol) Vinyltrichlorsilan und 2 ml (0,66 Gewichtsprozent, bezogen auf das Gewicht des Vinyltrichlorsilans) Ethylaluminiumsesquichlorid in den Kolben gegeben. Anschließend wird Chlorwasserstoff eingeleitet, wobei durch die rasche Umsetzung vom Chlorwasserstoff der Druck in dem Kolben unterhalb 1000 mbar (abs.) sinkt. Wenn durch Überdosierung von Chlorwasserstoff der Druck auf über 1000 mbar (abs.) steigt, wird das Einleiten von Chlorwasserstoff unterbrochen, bis der Druck wieder unter 1000 mbar (abs.) abgesunken ist. Dabei wird durch Außenkühlung dafür gesorgt, daß die Temperatur des Kolbeninhalts 40° C nicht übersteigt. 98 Gewichtsprozent des eingesetzten Vinyltrichlorsilans werden in 2-Chlorethyltrichlorsilan umgewandelt.

## Beispiel 3

Der wie in Beispiel 1 beschrieben ausgestattete 4-l-Dreihalskolben wird, wie in Beispiel 1 beschrieben, mehrfach mit Stickstoff gespült. Dann werden unter strömendem Stickstoff 1,83 kg (12 Mol) Divinyldichlorsilan und 14 ml (0,84 Gewichtsprozent, bezogen auf das Gewicht des Divinyldichlorsilans) Ethylaluminiumsesquichlorid in den Kolben gegeben. Anschließend werden in die so erhaltene Mischung 876 g (24 Mol) Chlorwasserstoff innerhalb von 4 Stunden eingeleitet. Dabei wird durch Außenkühlung dafür gesorgt, daß die Temperatur des Kolbeninhalts bei —6° bis 0° C bleibt. Es werden 2,6 kg Rohprodukt mit folgender gaschromatographisch bestimmter Zusammensetzung erhalten:

81 Gewichtsprozent Bis-(2-chlorethyl)-dichlorsilan
4 Gewichtsprozent 2-Chlorethyltrichlorsilan
4 Gewichtsprozent 2-Chlorethylvinyldichlorsilan
5 Gewichtsprozent Vinyltrichlorsilan
6 Gewichtsprozent nicht bestimmter Anteile.

Beispiel 4

Der wie in Beispiel 1 beschrieben ausgestattete 4-l-Dreihalskolben wird, wie in Beispiel 1 beschrieben, mehrfach mit Stickstoff gespült. Dann werden unter strömendem Stickstoff 1,91 kg (13,5 Mol) Vinylmethyldichlorsilan und 10 ml (0,58 Gewichtsprozent, bezogen auf das Gewicht des Vinylmethyldichlorsilans) Ethylaluminiumsesquichlorid gegeben. Anschließend werden in die so erhaltene Mischung 493 g (13,5 Mol) Chlorwasserstoff innerhalb von 5,5 Stunden eingeleitet. Dabei wird durch Außenkühlung dafür gesorgt, daß die Temperatur des Kolbeninhalts bei —2° C bis 0° C bleibt. Es werden 2,35 kg Rohprodukt mit folgender gaschromatographisch bestimmter Zusammensetzung erhalten:

92 Gewichtsprozent (2-Chlorethyl)methyldichlorsilan
2 Gewichtsprozent Vinylmethyldichlorsilan
5 Gewichtsprozent Methyltrichlorsilan
1 Gewichtsprozent nicht bestimmter Anteile.

Dieses Rohprodukt wird mit 10 ml des durch Trimethylsiloxygruppen endblockierten Dimethylpolysiloxans mit einer Viskosität von etwa 5 $mm^2 \cdot s^{-1}$ bei 25° C vermischt. Die anschließende Destillation bei 52° C und 20 mbar (abs.) ergibt 2,05 kg (2-Chlorethyl)methyldichlorsilan mit einer gaschromatographisch bestimmten Reinheit von 99 Gewichtsprozent, was 86% d. Th. entspricht.

## Patentansprüche

1. Verfahren zur Herstellung von 2-Chlorethylsilan durch Umsetzung von Vinylchlorsilan mit Chlorwasserstoff in Gegenwart von Katalysator, dadurch gekennzeichnet, daß als Katalysator mindestens eine Organoaluminiumverbindung der allgemeinen Formel

$R_cAlY_{3-c}$,

worin R gleiche oder verschiedene Alkylreste mit 1 bis 4 Kohlenstoffatomen, Y Halogen oder Wasserstoff bedeutet und c 1, 2 oder 3 ist bzw. in situ entstandenes Umsetzungsprodukt einer solchen Aluminiumverbindung mit mindestens einem der Reaktionsteilnehmer verwendet und vor dem Abdestillieren des gewünschten 2-Chlorethylsilans der Katalysator gegebenenfalls desaktiviert wird.

2. Verfahren nach Anspruch 1, dadurch gekennzeichnet, daß Organoaluminiumverbindung in Mengen von 0,05 bis 1 Gewichtsprozent, bezogen auf das Gewicht der jeweils eingesetzten Menge von Vinylchlorsilan, verwendet wird.

3. Verfahren nach mindestens einem der Ansprüche 1 bis 2, dadurch gekennzeichnet, daß der Katalysator durch Zugabe von Organopolysiloxan, das bei Raumtemperatur flüssig ist, zu dem Gemisch, aus dem das gewünschte 2-Chlorethylsilan abdestilliert werden soll, desaktiviert wird.

## Claims

1. Process for the manufacture of 2-chloroethylsilane by the reaction of vinylchlorosilane with hydrogen chloride in the presence of a catalyst, characterised in that at least one organoaluminium compound of the general formula

$R_cAlY_{3-c}$

in which R represents the same or different alkyl radicals having from 1 to 4 carbon atoms, Y represents halogen or hydrogen and c is 1, 2 or 3, or the reaction product, produced in situ, of such an aluminium compound with at least one of the reactants, is used as catalyst and the catalyst is

optionally deactivated before the desired 2-chloroethylsilane is distilled off.

2. Process according to claim 1, characterised in that the organoaluminium compound is used in amounts of from 0.05 to 1 per cent by weight, based on the weight of the amount of vinylchlorosilane used.

3. Process according to at least one of claims 1 and 2, characterised in that the catalyst is deactivated by the addition to the mixture from which the desired 2-chloroethylsilane is to be distilled off of an organopolysiloxane that is liquid at room temperature.

**Revendications**

1. Procédé pour préparer un (chloro-2 éthyl)-silane par réaction d'un vinyl-chlorosilane avec le chlorure d'hydrogène en présence d'un catalyseur, procédé caractérisé en ce qu'on utilise, comme catalyseur, au moins un composé organo-aluminique répondant à la formule générale:

$$R_cAlY_{3-c}$$

dans laquelle les R représentent des radicaux alkyles identiques ou différents qui contiennent chacun de 1 à 4 atomes de carbone, Y représente un halogène ou l'hydrogène et c est égal à 1, à 2 ou à 3, ou un produit formé in situ par réaction d'un tel composé de l'aluminium avec au moins l'un des partenaires réactionnels, et, avant de séparer par distillation le (chloro-2 éthyl)-silane voulu, on désactive éventuellement le catalyseur.

2. Procédé selon la revendication 1 caractérisé en ce que le composé organo-aluminique est utilisé en des quantités de 0,05 à 1% en poids par rapport au poids du vinyl-chlorosilane mis en jeu.

3. Procédé selon l'une des revendications 1 et 2, caractérisé en ce qu'on désactive le catalyseur en ajoutant un polyorganosiloxane qui est liquide à la température ambiante, au mélange duquel on doit séparer par distillation le (chloro-2 éthyl)-silane voulu.